# EUROPÄISCHE PATENTSCHRIFT

(11) **EP 2 513 455 B1**
(45) Veröffentlichungstag und Bekanntmachung des Hinweises auf die Patenterteilung: **11.01.2017**
(21) Anmeldenummer: 10805585.6
(22) Anmeldetag: 20.12.2010
(51) Int. Cl.: F02D 41/22, F02D 11/10, F02D 41/26, G06F 11/00, G06F 11/07

(54) **ÜBERWACHUNGSKONZEPT IN EINEM STEUERGERÄT**
MONITORING CONCEPT IN A CONTROL DEVICE
CONCEPT DE SURVEILLANCE DESTINÉ À UN APPAREIL DE COMMANDE

(30) Priorität: 18.12.2009 DE 102009059088
(43) Veröffentlichungstag der Anmeldung: 24.10.2012
(73) Patentinhaber: Conti Temic Microelectronic GmbH, 90411 Nürnberg (DE)
(72) Erfinder: JACOBI, Malte, 93105 Tegernheim (DE); BÖHM, Edwin, 91056 Erlangen (DE)
(74) Vertreter: Bonn, Roman Klemens
(86) Internationale Anmeldenummer: PCT/DE2010/001490
(87) Internationale Veröffentlichungsnummer: WO 2011/072661

(56) Entgegenhaltungen:
- EP-A2- 2 090 952
- WO-A2-03/056427
- DE-A1- 4 438 714

## Beschreibung

Die Erfindung betrifft ein Verfahren zur Überwachung eines Rechenelements, ein Rechenelement sowie einen Prozessor und einen Überwachungsrechner zur Durchführung des Verfahrens nach den Oberbegriffen der unabhängigen Ansprüche.

Es existieren verschiedene Konzepte, ein Steuergerät mit einem Rechnerelement zum Einsatz in einem Kraftfahrzeug einzelsicherfrei bzw. eigensicher zu gestalten, siehe zum Beispiel die WO 03/056427 A2. Eine Möglichkeit die Eigensicherheit eines Steuergerätes zu erreichen ist die Überwachung im 3-Ebenen Konzept.

Aus der DE 44 38 714 A1 sind ein Verfahren und eine Vorrichtung zur Steuerung einer Antriebseinheit eines Fahrzeugs bekannt. Hierbei weist das Steuergerät zur Leistungssteuerung nur ein einziges Rechnerelement auf. Das Rechnerelement führt sowohl die Abschaltpfad Steuerung als auch die Überwachung durch. Betriebssicherheit und Verfügbarkeit werden dabei dadurch sicher gestellt, dass zur Durchführung der Steuerung und der Überwachung wenigstens zwei, voneinander unabhängige Ebenen in einem einzigen Rechnerelement vorgesehen sind, wobei in einer ersten Ebene die Funktionen zur Leistungssteuerung bestimmt und in einer zweiten Ebene, insbesondere in Zusammenarbeit mit einem Überwachungsmodul , diese Funktionen und somit die Funktionsfähigkeit des Rechnerelement selbst überwacht werden.

Ferner wird in der DE 44 38 714 A1 eine dritte Ebene beschrieben, die eine Ablaufkontrolle der zweiten Ebene durchführt. Diese Überwachung durch die dritte Ebene steigert die Zuverlässigkeit und Verfügbarkeit des Steuergerätes erheblich. Insbesondere wird im Überwachungsmodul die Ablaufkontrolle als Frage-Antwort-Kommunikation ausgeführt.

Das 3-Ebenen Überwachungskonzept (EGAS-Konzept) wird bevorzugt bei Motorsteuergeräten von Fahrzeugen zur Überwachung elektronischer Motorsteuersysteme eingesetzt. Dabei besteht das Motorsteuergerät aus dem sog. Funktionsrechner und dem Überwachungsrechner. Funktionsrechner und Überwachungsrechner kommunizieren über ein Frage-Antwort-Verfahren. Darüber hinaus verfügen sie über separate Abschaltpfade.

Die Ebene 1 umfasst das eigentliche Funktionsmodul zur Funktionssteuerung der Antriebseinheit des Fahrzeugs. Sie wird daher auch als Funktionsebene bezeichnet. Sie beinhaltet Motorsteuerungsfunktionen, u.a. zur Umsetzung der angeforderten Motormomente, Komponentenüberwachungen, die Diagnose der Ein- und Ausgangsgrößen, sowie die Steuerung der Systemreaktionen im erkannten Fehlerfall. Die Ebene 1 wird auf dem Funktionsrechner ausgeführt.

Die Ebene 2, auch als Funktions-Überwachungsebene bezeichnet, umfasst das Sicherheitsmodul und wird ebenfalls auf dem Funktionsrechner ausgeführt. Sie erkennt den fehlerhaften Ablauf überwachungsrelevanter Umfänge des Funktionsmoduls der Ebene 1, u. a. durch die Überwachung der berechneten Momente oder der Fahrzeugbeschleunigung. Im Fehlerfall erfolgt die Auslösung von Systemreaktionen, wie zum Beispiel das Abschalten von sicherheitsrelevanten Endstufen.

Die Ebene 2 wird in einem durch die Ebene 3 abgesicherten Hardwarebereich des Funktionsrechners durchgeführt. Die Ebene 3, auch Rechner-Überwachungsebene genannt, umfasst das Überwachungsmodul auf einem unabhängigen Funktionsrechner mit Befehlssatztest, Programmablaufkontrolle, A/D Wandler-Test sowie zyklische und vollständige Speichertests der Ebene 2. Das Überwachungsmodul wird auf einem Funktionsrechner ausgeführt. Der vom Funktionsrechner unabhängige Überwachungsrechner testet durch ein Frage-Antwort-Verfahren die ordnungsgemäße Abarbeitung der Programmbefehle des Funktionsrechners. Im Fehlerfall erfolgt die Auslösung von Systemreaktionen unabhängig vom Funktionsrechner.

Bei aktuellen elektronischen Motorsteuerungssystemen ist die gesamte Funktions- und Überwachungssoftware in einem Steuergerät integriert. Das Überwachungskonzept kann auch in anderen Fahrzeugsteuergeräten, insbesondere Getriebesteuergeräten realisiert werden

Aus dem Stand der Technik sind Überwachungskonzepte bekannt, bei denen ein Überwachungsrechner mittels einer einzigen Überwachungseinheit (Monitoring Unit) im Funktionsrechner mehr als eine Programmablaufkontrolle durchführt. Dabei muss diese eine Überwachungseinheit sowohl die Einzelantworten aus den einzelnen Programmablaufkontrollen synchronisieren als auch die einzelnen Antworten zu einer Gesamtantwort zusammenfügen. Dabei können Fehler sowohl bei der Synchronisierung als auch beim Zusammenfügen der Antworten auftreten.

Es stellt sich daher die Aufgabe, die bekannten Verfahren zur Überwachung eines Rechenelements in einem Kraftfahrzeugsteuergerät zu verbessern.

Erfindungsgemäß wird die Aufgabe gelöst durch ein Verfahren mit den Merkmalen des unabhängigen Anspruchs 1.

Das erfindungsgemäße Rechenelement in dem Kraftfahrzeugsteuergerät umfasst im wesentlichen drei Software-Programmmodule: ein Funktionsmodul zur Funktionssteuerung des Kraftfahrzeugs, ein Sicherheitsmodul zur Überprüfung des Funktionsmoduls und ein Überwachungsmodul wenigstens zur Überprüfung des Sicherheitsmoduls.

Kern der Erfindung ist, dass das Überwachungsmodul zwei voneinander unabhängige, als Software ausgeführte Monitoring Elements umfasst, wobei jedes Monitoring Element jeweils einer als Hardware ausgeführten Monitoring Unit zugeordnet ist.

Damit lassen sich zeitlich vollkommen unterschiedliche Software-Tasks überwachen. Nur wenn beide korrekte Antworten im richtigen Zeitfenster abliefern, wird der sicherheitskritische Pfad freigeschaltet.

Insbesondere mit dem Einschalten des Steuergerätes wird im Rechenelement jeweils eine sogenannte State Machine zum Konfigurieren einer zugehörigen Monitoring Unit durchlaufen. Eine State Machine ist ein Verhaltensmodell, bestehend aus Zuständen, den sog. States, Zustandsübergängen und Aktionen. Ein Zustand speichert die Information über die Vergangenheit. Er spiegelt die Änderungen der Eingabe seit dem Systemstart bis zum aktuellen Zeitpunkt wieder. Ein Zustandsübergang zeigt eine Änderung des Zustandes der State Machine und wird durch logische Bedingungen beschrieben, die erfüllt sein müssen, um den Übergang zu ermöglichen. Eine Aktion ist die Ausgabe der State Machine, die in einer gewissen Situation erfolgt.

Wenn beide State Machines erfolgreich durchlaufen worden sind, nehmen die beiden Monitoring Units vorteilhafterweise mittels des jeweiligen Monitoring Elements die Überwachung des Rechenelements auf.

Die erste Monitoring Unit führt mittels des ersten Monitoring Elements als erste Kontrolle im Sicherheitsmodul insbesondere einen Speichertest und eine Programmablaufkontrolle durch. Weiterhin führt die zweite Monitoring Unit mittels des zweiten Monitoring Elements als zweite Kontrolle im Überwachungsmodul insbesondere einen Befehlssatztest und einen AD-Wandler-Test durch. Vorteilhafterweise werden die jeweiligen Kontrollen in sogenannten Testpfaden durchgeführt.

Ein Abschaltpfadtest stellt insbesondere sicher, dass der Funktionsrechner oder der Überwachungsrechner zum Beispiel die sicherheitsrelevanten Endstufen korrekt abschalten kann, wenn ein Fehler auftritt.

Besonders hervorzuheben ist, dass beim Auftreten eines Fehlers in einer der beiden Kontrollen jeweils ein Fehlerzähler bedient wird und bei Überschreiten von frei programmierbaren Fehlerreaktionsschwellen unabhängig vom Funktionsmodul eine Systemreaktion durch den Überwachungsrechner ausgelöst wird.

Eine derartige Systemrektion kann sein, das Fahrzeug in einen eingeschränkten Notlaufmodus zu bringen, der es zum Beispiel erlaubt, gerade noch auf dem Standstreifen einer Fahrbahn auszurollen.

Dabei ist die Fehlerzählung zur Erhöhung der Sicherheit vorteilhafterweise asymmetrisch ausgeführt, das heißt, dass bei einer falschen Antwort im Frage-Antwort -Verfahren zweifach nach oben, bei einer richtigen Antwort dagegen nur einfach nach unten gezählt wird.

Vorzugsweise wird beim Initialisieren des Steuergerätes im Rechenelement die entsprechende Monitoring Unit konfiguriert. Bei diesem Vorgang werden jeweils neben anderen Parametern, beispielsweise eine Antwortzeit und ein Antwortzeitfenster des Frage-Antwort-Verfahrens sowie eine Abschaltschwelle für die sicherheitsrelevanten Endstufen und eine Reset-Schwelle nebst Reset-Freigabe festgelegt. Dabei können die Parameter je Monitoring Unit durchaus voneinander abweichen. Es ist aber auch denkbar, dass beide Monitoring Units gleich konfiguriert werden.

Von besonderem Vorteil ist, dass das Konfigurieren einer entsprechenden Monitoring Unit nur in einem entsprechenden INIT state möglich ist, und in einer State Machine nur definierte Zustandsübergänge erlaubt werden. Außerdem wird insbesondere ein Rücksprung zum INIT State nur über einen State RESET durchgeführt. Damit wird verhindert, dass nachträglich bewusst oder unbewusst die Parameter verändert werden können.

Eine weitere Aufgabe der Erfindung ist es, einen gegenüber dem genannten Stand der Technik verbesserten Prozessor mit einem vorbeschriebenen Rechenelement in einem Steuergerät eines Kraftfahrzeugs anzugeben.

Diese Aufgabe ist erfindungsgemäß gelöst durch einen Prozessor mit den Merkmalen des unabhängigen Anspruchs 12.

Wie weiter oben ausführlich ausgeführt, umfasst das Rechenelement des Steuergerätes im wesentlichen die drei Programmmodule Funktionsmodul, Sicherheitsmodul und Überwachungsmodul und das Rechenelement wird auf dem Prozessor ausgeführt. Der Prozessor ist insbesondere unterteilt in einen Funktionsrechner und einen Überwachungsrechner, wobei das Funktionsmodul, das Sicherheitsmodul und das Überwachungsmodul auf dem Funktionsrechner ausgeführt werden. Der Überwachungsrechner kommuniziert mit dem Funktionsrechner üblicherweise mittels eines Frage-Antwort-Verfahrens über eine Schnittstelle.

Der Kern der Erfindung ist, dass der Funktionsrechner und der Überwachungsrechner insbesondere physikalisch unabhängig voneinander sind und der Überwachungsrechner zudem zwei voneinander funktional unabhängige Monitoring Units umfasst. Zur Überwachung der ordnungsgemäßen Abarbeitung der Programmbefehle des Funktionsrechners ist im Funktionsrechner vorteilhafterweise durch jede Monitoring Unit jeweils eine Kontrolle ausführbar. Dadurch kann das Kontrollverfahren vorteilhafterweise beschleunigt und sicherer gestaltet werden.

In der nachfolgenden Beschreibung werden die Merkmale und Einzelheiten der Erfindung in Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:
- Fig. 1: ein 3-Ebenen Konzept, unterteilt in Module (Software) und Rechner (Hardware), und
- Fig. 2: eine State Machine mit Zuständen, Übergängen und Bedingungen.

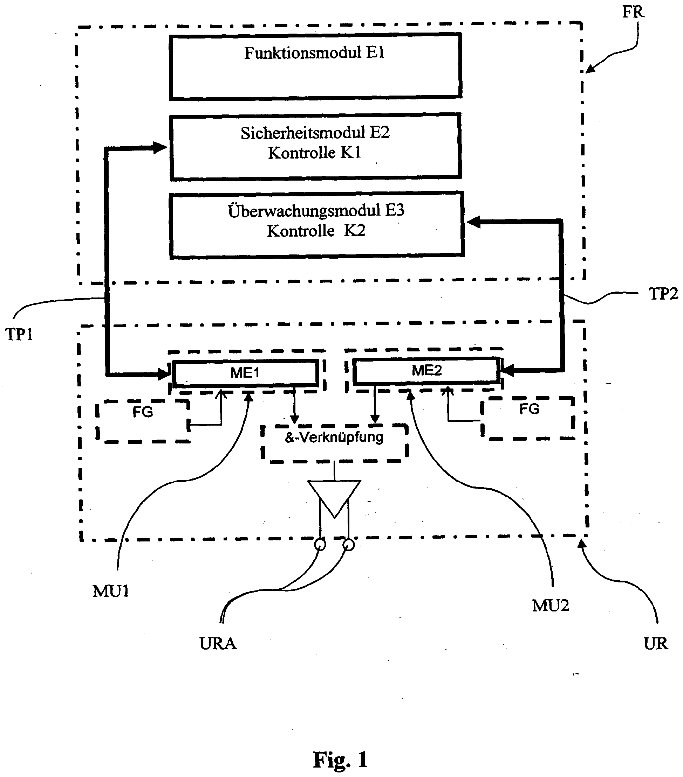

Die Kästchen in Fig. 1 mit strichpunktierten bzw. gestrichelten Umrandungen zeigen je eine Hardware-Komponente, die Kästchen mit durchgezogenen Umrandungen zeigen je eine Software-Komponente. Die geradlinigen Pfeile zwischen den Kästchen zeigen je einen Datenaustausch.

Fig. 1 zeigt ein im wesentlichen aus dem EGAS-Konzept bekanntes 3-Ebenen-Überwachungsmodell, wie es beispielsweise in einem Motorsteuergerät oder einem Getriebesteuergerät in Kraftfahrzeugen eingesetzt wird.

Das erste strichpunktierte Kästchen kennzeichnet den Funktionsrechner (FR) des Prozessors. Das zweite strichpunktierte Kästchen kennzeichnet den Überwachungsrechner (UR) des Prozessors. Funktionsrechner (FR) und Überwachungsrechner (UR) sind physikalisch voneinander getrennt auf dem Prozessor angeordnet. Der Überwachungsrechner (UR) kann beispielsweise als ASIC ausgeführt sein. Die drei Programmmodule Funktionsmodul (E1), Sicherheitsmodul (E2) und Überwachungsmodul (E3) werden auf dem Funktionsrechner (FR) ausgeführt.

Das Funktionsmodul (E1) stellt die Ebene 1 des EGAS-Konzepts dar, die auch als Funktionsebene bezeichnet wird. Sie dient insbesondere zur Funktionssteuerung der Antriebseinheit des Fahrzeugs, und beinhaltet, wie oben erläutert, zum Beispiel Motorsteuerungsfunktionen, u.a. zur Umsetzung der angeforderten Motormomente, Komponentenüberwachungen, die Diagnose der Ein- und Ausgangsgrößen, sowie die Steuerung der Systemreaktionen im erkannten Fehlerfall.

Das Sicherheitsmodul (E2) stellt die Ebene 2 des EGAS-Konzepts dar, die auch als Funktions-Überwachungsebene bezeichnet wird. Sie erkennt den fehlerhaften Ablauf überwachungsrelevanter Umfänge des Funktionsmoduls (E1) der Ebene 1. So werden insbesondere die berechneten Momente oder zum Beispiel die Fahrzeugbeschleunigung überwacht. Tritt ein Fehler auf, erfolgt insbesondere die Auslösung von Systemreaktionen. Das Sicherheitsmodul (E2) wird primär in einem durch das Überwachungsmodul (E3) abgesicherten Hardwarebereich des Funktionsrechners (FR) durchgeführt.

Das Überwachungsmodul (E3) stellt die Ebene 3 des EGAS-Konzepts dar, die auch als Rechner-Überwachungsebene bezeichnet wird. Das Überwachungsmodul (E3) wird insbesondere auf dem vom Überwachungsrechner (UR) unabhängigen Funktionsrechner (FR) ausgeführt. Der Überwachungsrechner (UR) testet zum Beispiel durch wenigstens ein Frage-Antwort-Verfahren die ordnungsgemäße Abarbeitung der Programmbefehle des Funktionsrechners (FR). Tritt ein Fehler auf, erfolgt im Besonderen eine Auslösung von Systemreaktionen unabhängig vom Funktionsrechner (FR).

Der Überwachungsrechner (UR) umfasst im wesentlichen zwei voneinander unabhängige Monitoring Units (MU1, MU2). Auf jeder Monitoring Unit (MU1, MU2) wird ein entsprechendes Monitoring Element (ME1, ME2) zur Kontrolle (K1, K2) des Sicherheitsmoduls (E2) bzw. des Überwachungsmoduls (E3) ausgeführt.

So führt zum Beispiel die erste Monitoring Unit (MU1) mittels des ersten Monitoring Elements (ME1) als erste Kontrolle (K1) über den ersten Testpfad (TP1) im Sicherheitsmodul (E2) einen Speichertest und eine Programmablaufkontrolle durch.

Parallel dazu und unabhängig von der Kontrolle (K1) führt die zweite Monitoring Unit (MU2) mittels des zweiten Monitoring Elements (ME2) als zweite Kontrolle (K2) über den zweiten Testpfad (TP2) im Überwachungsmodul (E3) vorzugsweise einen Befehlssatztest und einen AD-Wandler-Test durch. Die zweite Kontrolle (K2) könnte auch auf der ersten Monitoring Unit (MU1) mittels des ersten Monitoring Elements (ME1) über den ersten Testpfad (TP1) ausgeführt werden, und umgekehrt.

Insbesondere erfolgt die besagte Progammablaufkontrolle als Frage-Antwort-Verfahren zwischen einer Monitoring Unit (MU1, MU2) und dem Funktionsrechner (FR). Die entsprechenden Fragen werden zum Beispiel in einem Monitoring Element (ME1, ME2) zugeordneten Fragengenerator (FG) erzeugt Die Fragengeneratoren FG sind gleich ausgeführt, aber die Auswahl einer Frage erfolgt per Zufall. Daher sind die Fragen von Monitoring Unit (MU1) und Monitoring Unit (MU2) praktisch immer unterschiedlich.

Tritt in der Kontrolle (K1, K2) ein Fehler auf, so wird vorteilhafterweise jeweils ein Fehlerzähler hoch gesetzt. Bei Überschreiten einer entsprechenden frei programmierbaren Fehlerreaktionsschwelle wird im Besonderen durch das Überwachungsmodul (E3) eine Systemreaktion unabhängig vom Funktionsmodul (E1) ausgelöst. Die frei programmierbaren Fehlerreaktionsschwellen können für verschiedene Systemreaktionen, wie zum Beispiel dem Abschalten der sicherheitsrelevanten Endstufen oder dem Reset des Funktionsrechners (FR) unterschiedlich sein. Wenn eine der Monitoring Units (MU1, MU2) einen Reset generiert, wird das komplette System incl. State Machine (SM1, SM2) und Funktionsrechner (FR) zurückgesetzt. Die Konfiguration könnte aber beispielsweise so sein, dass nur bei Fehlern der Monitoring Unit (MU1) ein Reset ausgelöst wird, und bei Fehlern der Monitoring Unit (MU2) lediglich die sicherheitsrelevante Endstufe abgeschaltet wird.

Ferner kann die Erzeugung eines Reset-Befehls als Fehlerreaktion wahlweise freigegeben oder gesperrt werden.

Die Ausgänge (URA) des Überwachungsrechners (UR) sind vorteilhafterweise komplementär ausgeführt. Bei einem Totalausfall des beispielsweise als ASIC ausgeführten Überwachungsrechners (UR) zum Beispiel durch einen Chip-Bruch oder einen sogenannten Latch-up, d. h. einem Übergang eines Halbleiterbauelements in einen niederohmigen Zustand, geht man davon aus, dass alle Ausgänge des Überwachungsrechners (UR) entweder gleichzeitig auf einem high- oder einem low-Pegel liegen. Die komplementären Ausgänge zusammen mit einer nicht gezeigten externen Beschaltung sorgen in diesem Fall dafür, dass der Sicherheitspfad des Systems und damit die sicherheitsrelevanten Endstufen des Systems abgeschaltet werden. Die externe Beschaltung besteht z. B. aus Widerständen und Transistoren und sorgt dafür, dass nur genau eine Kombination der komplementären Ausgänge die sicherheitsrelevanten Endstufen freigibt.

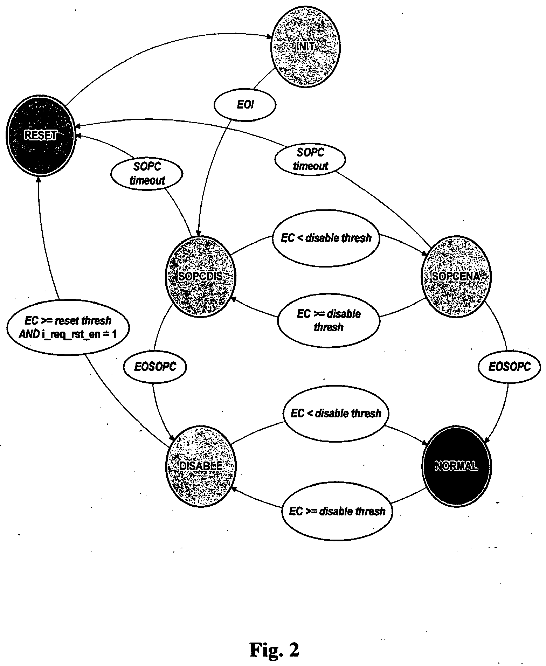

Fig. 2 zeigt eine State Machine. Die State Machine ist vorteilhafterweise mit geringem Hardware-Aufwand realisierbar. Dabei ist diese Ausführungsform der State Machine schneller, sicherer und weniger störanfällig als eine als Software ausgeführte State Machine . Zudem ist sie nicht manipulierbar. Wie in der Beschreibungseinleitung bereits dargelegt, ist eine State Machine ein Verhaltensmodell, bestehend aus Zuständen, den sog. States, Zustandsübergängen und Aktionen. Ein Zustand speichert die Information über die Vergangenheit. Er gibt die Änderungen der Eingabe seit dem Systemstart bis zum aktuellen Zeitpunkt wieder. Ein Zustandsübergang zeigt eine Änderung des Zustandes der State Machine und wird durch logische Bedingungen beschrieben, die erfüllt sein müssen, um den Übergang zu ermöglichen. Eine Aktion ist die Ausgabe der State Machine, die in einer bestimmten Situation erfolgt. Die State Machines werden in digitalen Schaltungen hauptsächlich durch speicherprogrammierbare Steuerungen, logische Gatter, Flip-Flops oder Relais realisiert. Zur Implementierung der Hardware verwendet man in der Regel ein Register zum Speichern der Zustandsvariablen, eine Logikeinheit, die die Zustandsübergänge auswählt, und eine weitere Logikeinheit, die für die Ausgabe zuständig ist. Jedem Monitoring Element (ME1, ME2) ist eigens eine State Machine (SM1, SM2) zugeordnet.

Beim Initialisieren oder nach einem Reset des Steuergeräts wird der (INIT) State eingenommen. Im (INIT) State wird die Monitoring Unit (MU 1, MU2) durch das Funktionsmodul (E1) über ein Kommunikationsinterface zwischen Überwachungsrechner (UR) und Funktionsrechner (FR) konfiguriert. Dabei werden insbesondere die Antwortzeit, das Antwortzeitfenster, die Fehlerreaktionsschwelle, speziell die Abschaltschwelle (thresh) und die Reset-Schwelle (reset thresh) festgelegt.

Die Antwortzeit, die beim Durchlaufen der State Machine (SM1, SM2) festgelegt wird, ist im wesentlichen frei konfigurierbar und liegt üblicherweise im Bereich zwischen 1 ms und 255 ms.

Insbesondere wird auch das Antwortzeitfenster in der State Machine festgelegt und liegt primär im Bereich zwischen 1 ms und 255 ms. Das Verhältnis zwischen Antwortzeit und Antwortzeitfenster ist insbesondere frei skalierbar.

Ferner wird der Anfangswert des Fehlerzählers automatisch oberhalb der Abschaltschwelle (thresh) gesetzt, um sicherzustellen, dass der Fehlerzähler im (INIT) State abgeschaltet bleibt. Durch die Aktion (EOI) (= End Of INIT State) ist die Konfiguration des Monitoring Element (ME1, ME2) abgeschlossen und auch nicht mehr änderbar. Damit ist der Zustandsübergang in den State (SOPCDIS) (= Switch Off Path Check Disable) vollzogen, wobei (SOPC) der Abschaltpfadtest ist, wobei ein Abschaltpfadtest sicherstellen kann, dass der Funktionsrechner oder der Überwachungsrechner zum Beispiel die sicherheitsrelevanten Leistungsendstufen korrekt abschalten kann, wenn ein Fehler auftritt. In diesem State sind die Leistungsendstufen noch nicht freigeschaltet.

Beim Abschaltpfadtest werden in der State Machine die Zustände (SOPCDIS) und (SOPCENA) eingenommen. Beim ersten sind die Endstufen abgeschaltet, beim zweiten freigegeben. Vorteil dieser Lösung ist, dass während des Abschaltpfadtests die Antworten schnellstmöglich ohne Rücksicht auf das Antwortzeitfenster geschickt werden können. Damit kann die System-Hochlaufzeit kurz gehalten werden.

Mit dem Erreichen des State (SOPCDIS) wird unter anderem der SOPC timer gestartet, der die Zeit misst bis zum Befehl (EOSOPC) (=End of SOPC). Wenn der Test zu lange dauert, wird er abgebrochen und der State (SOPCDIS) wird über die Aktion (SOPC timeout) überführt in den State (RESET).

Im State (SOPCDIS) startet das Frage-Antwort- Spiel zwischen Überwachungsrechner (UR) und Funktionsrechner (FR) vorzugsweise ohne zeitliche Beschränkung, um einen möglichst schnellen Ablauf des Tests zu gewährleisten. Das heißt, das Antwortzeitfenster ist offen. Bei einer falschen Antwort wird der Fehlerzähler erhöht. Wenn der Fehlerzähler unterhalb einer Abschalt-Schwelle (thresh) liegt, erfolgt insbesondere unverzüglich der Übergang in den State (SOPCENA) (= Switch Off Path Check Enable) durch die Bedingung (EC<disable thresh). Die Leistungsendstufen werden damit freigeschaltet.

Der Übergang vom State (SOPCDIS) in den State (DISABLE) erfolgt über die Bedingung (EOSOPC) (= End Of Switch Off Path Check), die durch das Kommunikationsinterface zwischen Funktionsrechner (FR) und Überwachungsrechner (UR) angestoßen wird. Die Leistungsendstufen bleiben, wie im State (SOPCDIS) definiert, gesperrt bzw. abgeschaltet. Einzige Bedingung ist das richtige Kommando vor Ablauf der Bedingung (SOPC timeout).

Bei Erreichen des State (SOPCENA), insbesondere ausgehend vom State (SOPCDIS), läuft der SOPC timer vorteilhafterweise weiter. Das Frage-Antwort-Spiel zwischen Überwachungsrechner (UR) und Funktionsrechner (FR) läuft ebenfalls ohne zeitliche Beschränkung weiter. Wenn der Fehlerzähler eine Abschalt -Schwelle (thresh) erreicht bzw. überschritten hat, erfolgt insbesondere ein Übergang zurück in den State (SOPCDIS) durch die Bedingung (EC>=disable thresh).

Wenn der Abschaltpfadtest zu lange dauert, wird er abgebrochen und der State (SOPCENA) wird über die Bedingung (SOPC timeout) in den State (RESET) überführt. Der anschließende Übergang vom State (RESET) in den State (INIT) erfolgt automatisch.

Der Übergang vom State (SOPCENA) in den State (NORMAL) erfolgt vorwiegend über die Bedingung (EOSOPC), die wieder durch das Kommunikationsinterface angestoßen wird.

Im State (NORMAL) werden die Leistungsendstufen freigeschaltet, sofern sie nicht schon in einem vorherigen State freigeschaltet worden sind. In diesem State wird das Frage-Antwort-Spiel zwischen Überwachungsrechner (UR) und Funktionsrechner (FR) fortgesetzt, wobei insbesondere der Zählerstand des Fehlerzählers aus dem vorherigen State übernommen wird. Im Gegensatz zu den States (SOPCENA) und (SOPCDIS) des Abschaltpfadtests gibt es hier vorzugsweise eine zeitliche Beschränkung bezüglich Antwortzeit und Antwortzeitfenster. Antwort darf nicht zu früh und nicht zu spät kommen, um eine Laufzeitüberwachung des Betriebssystem des Funktionsrechners sicherzustellen. Die Antwortzeit ist der spätest mögliche Zeitpunkt zum Senden der Antwort. Als zweites wird ein sogenanntes "closed window" konfiguriert. In diesem Bereich darf keine Antwort gesendet werden. Die Differenz aus Antwortzeit und "closed window" ergibt das "open window" bzw. Antwortzeitfenster.

Antwortzeit und Antwortzeitfenster sind zuvor im State (INIT) programmiert worden. Der Fehlerzähler wird vorteilhafterweise erhöht sowohl bei einer falschen Antwort als auch beim Überschreiten der Antwortzeit oder des Antwortzeitfensters. Beim Erreichen beziehungsweise Überschreiten einer AbschaltSchwelle (thresh)erfolgt der Übergang in den State (DISABLE) durch die Bedingung (EC>=disable thresh).

Im State (DISABLE) werden die Leistungsendstufen ausgeschaltet. In diesem State wird das Frage-Antwort-Spiel zwischen Überwachungsrechner (UR) und Funktionsrechner (FR) mit unverändertem Fehlerzählerstand fortgesetzt. Auch hier gibt es eine zeitliche Beschränkung bezüglich Antwortzeit und Antwortzeitfenster. Der Fehlerzähler wird ebenfalls sowohl bei einer falschen Antwort als auch beim Überschreiten der Antwortzeit bzw. des Antwortzeitfensters erhöht. Beim Unterschreiten der Schwelle (thresh) erfolgt durch die Bedingung (EC<disable thresh) der Übergang zurück in den State (NORMAL). Im state (NORMAL) sind die Endstufen wieder freigegeben.

Sobald im State (DISABLE) der Fehlerzähler eine Reset- Schwelle (reset thresh) erreicht hat und das Register für die Reset-Freigabe den voreingestellten Wert 1 hat, erfolgt durch die Bedingung (EC>=reset thresh AND i_req_rst_en=1) der Übergang in den State (RESET). Der anschließende Übergang vom State (RESET) in denen State (INIT) erfolgt wieder automatisch.

Um den gesamten Ablauf in der State Machine noch schneller zu gestalten, kann in der State Machine der States (SOPCENA) ausgelassen werden. Ein schneller Abschaltpfadtest findet dann nicht statt.

Wenn beide State Machines erfolgreich durchlaufen worden sind, nehmen die beiden Monitoring Units im (NORMAL) State vorteilhafterweise mittels des jeweiligen Monitoring Elements die Überwachung des Rechenelements auf.

Zusammenfassend kann gefolgert werden, dass das erfindungsgemäße Überwachungskonzept zur Überwachung eines Rechenelements in einem Steuergerät eines Kraftfahrzeugs, gegenüber den bekannten Überwachungskonzepten sowohl bzgl. Schnelligkeit, Programmieraufwand und Sicherheit eine Verbesserung darstellt.

## Patentansprüche

1. Verfahren zur Überwachung eines Rechenelements in einem Steuergerät eines Kraftfahrzeugs, wobei das Rechenelement im wesentlichen drei Programmmodule umfasst, mit deren Hilfe das Fahrverhalten des Kraftfahrzeugs beeinflusst wird, wobei das Rechenelement mithilfe der Programmmodule abhängig von wenigstens einer Eingangsgröße wenigstens eine Größe zur Steuerung wenigstens einer Funktion des Kraftfahrzeugs erzeugt, wobei:
- das erste Programmmodul ein Funktionsmodul (E1) zur Funktionssteuerung des Kraftfahrzeugs ist,
- das zweite Programmmodul ein Sicherheitsmodul (E2) zur Überprüfung des Funktionsmoduls (E1) ist,
- das dritte Programmmodul ein Überwachungsmodul (E3) wenigstens zur Überprüfung des Sicherheitsmoduls (E2) ist,
**dadurch gekennzeichnet, dass**
das Überwachungsmodul (E3) zwei voneinander unabhängige Monitoring Elements (ME1, ME2) umfasst und mit dem Einschalten des Steuergerätes im Rechenelement jeweils eine State Machine (SM1, SM2) zum Konfigurieren einer zugehörigen Monitor Unit (MU1, MU2) durchlaufen wird, und wenn beide State Machines (SM1, SM2) erfolgreich durchlaufen worden sind, die Monitoring Units (MU1, MU2) mittels des jeweiligen Monitoring Elements (ME1, ME2) ihre Überwachungsfunktion aufnehmen.

2. Verfahren nach Anspruch 1, **dadurch gekennzeichnet, dass** die erste Monitoring Unit (MU1) mittels des ersten Monitoring Elements (ME1) eine erste Kontrolle (K1) im Sicherheitsmodul (E2) und die zweite Monitoring Unit (MU2) mittels des zweiten Monitoring Elements (ME2) eine zweite Kontrolle (K2) im Überwachungsmodul (E3) in Testpfaden (TP1, TP2) durchführt.

3. Verfahren nach Anspruch 1 oder 2, **dadurch gekennzeichnet, dass** die erste Monitoring Unit (MU1) als erste Kontrolle (K1) im Sicherheitsmodul (E2) einen Speichertest und eine Programmablaufkontrolle durchführt.

4. Verfahren nach Anspruch 1 oder 2, **dadurch gekennzeichnet, dass** die zweite Monitoring Unit (MU2) als zweite Kontrolle (K2) im Überwachungsmodul (E3) einen Befehlssatztest und einen AD-Wandler-Test durchführt.

5. Verfahren nach einem der vorhergehenden Ansprüche, **dadurch gekennzeichnet, dass** beim Auftreten eines Fehlers in der Kontrolle (K1, K2) ein Fehlerzähler bedient wird und bei Überschreiten von frei programmierbaren Fehlerreaktionsschwellen (thresh, reset thresh) durch das Überwachungsmodul (E3) eine Systemreaktion unabhängig vom Funktionsmodul (E1) ausgelöst wird.

6. Verfahren nach einem der vorhergehenden Ansprüche, **dadurch gekennzeichnet, dass** beim Initialisieren des Steuergerätes im Rechenelement beim Konfigurieren der entsprechenden Monitoring Unit (MU1, MU2) neben anderen Parametern eine Antwortzeit, eine Antwortzeitfenster, eine Abschaltschwelle (thresh) und Reset-Schwelle (reset thresh) festgelegt werden, wobei die Parameter je Monitoring Unit (MU1, MU2) voneinander abweichen können.

7. Verfahren nach einem der vorhergehenden Ansprüche, **dadurch gekennzeichnet, dass** beide Monitoring Units (MU1, MU2) gleich konfiguriert werden.

8. Verfahren nach einem der vorhergehenden Ansprüche, **dadurch gekennzeichnet, dass** das Konfigurieren der entsprechenden Monitoring Unit (MU1, MU2) in der zugehörigen State Machine (SM1, SM2) nur in einem entsprechenden (INIT) State möglich ist.

9. Verfahren nach einem der vorhergehenden Ansprüche , **dadurch gekennzeichnet, dass** in der State Machine (SM1, SM2) nur definierte Zustandsübergänge erlaubt werden und ein Rücksprung zum (INIT) State nur durch einen Reset durchgeführt wird.

10. Verfahren nach einem der vorhergehenden Ansprüche, **dadurch gekennzeichnet, dass** eine Fehlerzählung asymmetrisch erfolgt.

11. Rechenelement konfiguriert zur Durchführung eines Verfahrens nach Anspruch 1, wobei das Rechenelement im wesentlichen drei Programmmodule umfasst, mit deren Hilfe das Fahrverhalten des Kraftfahrzeugs beeinflusst wird, und wobei das Rechenelement mithilfe der Programmmodule abhängig von wenigstens einer Eingangsgröße wenigstens eine Größe zur Steuerung wenigstens einer Funktion des Kraftfahrzeugs erzeugt, wobei:
- das erste Programmmodul ein Funktionsmodul (E1) zur Funktionssteuerung des Kraftfahrzeugs ist,
- das zweite Programmmodul ein Sicherheitsmodul (E2) zur Überprüfung des Funktionsmoduls (E1) ist
- das dritte Programmmodul ein Überwachungsmodul (E3) wenigstens zur Überprüfung des Sicherheitsmoduls (E2) ist,
**dadurch gekennzeichnet, dass**
das Überwachungsmodul (E3) zwei unabhängige Monitoring Elements (ME1, ME2) umfasst, welche die zugehörige Monitor Units (MU1, MU2) konfigurieren.

12. Prozessor mit einem Rechenelement nach Anspruch 11, wobei der Prozessor im wesentlichen einen Funktionsrechner (FR) und einen Überwachungsrechner (UR) umfasst, und wobei das Funktionsmodul (E1), das Sicherheitsmodul (E2) und das Überwachungsmodul (E3) auf dem Funktionsrechner (FR) ausgeführt werden, und der Überwachungsrechner (UR) mit dem Funktionsrechner (FR) mittels eines Frage-Antwort-Verfahrens über eine Schnittstelle kommuniziert, **dadurch gekennzeichnet, dass** der Funktionsrechner (FR) und der Überwachungsrechner (UR) physikalisch unabhängig voneinander sind und der Überwachungsrechner (UR) zwei voneinander unabhängige Monitoring Units (MU1, MU2) umfasst, wobei durch jede Monitoring Unit (MU1, MU2) im Funktionsrechner (FR) jeweils eine Kontrolle (K1, K2) zur Überwachung der ordnungsgemäßen Abarbeitung der Programmbefehle des Funktionsrechners (FR) ausführbar ist.

13. Überwachungsrechner (UR) nach Anspruch 12, **dadurch gekennzeichnet, dass** der Überwachungsrechner (UR) zwei voneinander unabhängige Monitoring Units (MU1, MU2) umfasst, wobei durch jede Monitorng Unit (MU1, MU2) in einem Funktionsrechner (FR) außerhalb des Überwachungsrechners (UR) jeweils eine Kontrolle (K1, K2) zur Überwachung der ordnungsgemäßen Abarbeitung der Programmbefehle des Funktionsrechners (FR) ausgeführt wird.

## Claims

1. Method for monitoring a computation element in a controller of a motor vehicle, wherein the computation element comprises essentially three program modules that are used to influence the driving behaviour of the motor vehicle, wherein the computation element uses the program modules to take at least one input variable as a basis for producing at least one variable for controlling at least one function of the motor vehicle, wherein:
- the first program module is a functional module (E1) for functional control of the motor vehicle,
- the second program module is a safety module (E2) for checking the functional module (E1),
- the third program module is a monitoring module (E3) at least for checking the safety module (E2),
**characterized in that**
the monitoring module (E3) comprises two mutually independent monitoring elements (ME1, ME2) and, when the controller is switched on, a respective state machine (SM1, SM2) for configuring an associated monitor unit (MU1, MU2) is transited in the computation element, and when both state machines (SM1, SM2) have been transited successfully, the monitor units (MU1, MU2) use the respective monitoring element (ME1, ME2) to commence their monitoring function.

2. Method according to Claim 1, **characterized in that** the first monitoring unit (MU1) uses the first monitoring element (ME1) to perform a first check (K1) in the safety module (E2) and the second monitoring unit (MU2) uses the second monitoring element (ME2) to perform a second check (K2) in the monitoring module (E3) in test paths (TP1, TP2).

3. Method according to Claim 1 or 2, **characterized in that** the first monitoring unit (MU1) performs a memory test and a program flow check as the first check (K1) in the safety module (E2).

4. Method according to Claim 1 or 2, **characterized in that** the second monitoring unit (MU2) performs an instruction set test and an AD converter test as the second check (K2) in the monitoring module (E3).

5. Method according to one of the preceding claims, **characterized in that** when an error occurs in the check (K1, K2), an error counter is operated and when user-programmable error reaction thresholds (thresh, reset thresh) are exceeded, the monitoring module (E3) initiates a system reaction independently of the functional module (E1).

6. Method according to one of the preceding claims, **characterized in that** when the controller is initialized, a response time, a response time window, a switch-off threshold (thresh) and a reset threshold (reset thresh), besides other parameters, are stipulated in the computation element when the relevant monitoring unit (MU1, MU2) is configured, the parameters being able to differ from one another for each monitoring unit (MU1, MU2).

7. Method according to one of the preceding claims, **characterized in that** both monitoring units (MU1, MU2) are configured in the same way.

8. Method according to one of the preceding claims, **characterized in that** it is possible to configure the relevant monitoring unit (MU1, MU2) in the associated state machine (SM1, SM2) only in an appropriate (INIT) state.

9. Method according to one of the preceding claims, **characterized in that** only defined state transitions are permitted in the state machine (SM1, SM2), and a return to the (INIT) state is performed only by a reset.

10. Method according to one of the preceding claims, **characterized in that** error counting is effected asymmetrically.

11. Computation element configured to perform a method according to Claim 1, wherein the computation element comprises essentially three program modules that are used to influence the driving behaviour of the motor vehicle, and wherein the computation element uses the program modules to take at least one input variable as a basis for producing at least one variable for controlling at least one function of the motor vehicle, wherein:
- the first program module is a functional module (E1) for functional control of the motor vehicle,
- the second program module is a safety module (E2) for checking the functional module (E1),
- the third program module is a monitoring module (E3) at least for checking the safety module (E2),
**characterized in that**
the monitoring module (E3) comprises two independent monitoring elements (ME1, ME2) that configure the associated monitor units (MU1, MU2).

12. Processor having a computation element according to Claim 11, wherein the processor comprises essentially a functional computer (FR) and a monitoring computer (UR), and wherein the functional module (E1), the safety module (E2) and the monitoring module (E3) are executed on the functional computer (FR), and the monitoring computer (UR) communicates with the functional computer (FR) using a question/answer method via an interface, **characterized in that**
the functional computer (FR) and the monitoring computer (UR) are physically independent of one another and the monitoring computer (UR) comprises two mutually independent monitoring units (MU1, MU2), wherein each monitoring unit (MU1, MU2) can execute a respective check (K1, K2) in the functional computer (FR) to monitor the correct execution of the program commands of the functional computer (FR).

13. Monitoring computer (UR) according to Claim 12, **characterized in that** the monitoring computer (UR) comprises two mutually independent monitoring units (MU1, MU2), wherein each monitoring unit (MU1, MU2) executes a respective check (K1, K2) in a functional computer (FR) outside the monitoring computer (UR) to monitor the correct execution of the program commands of the functional computer (FR).

## Revendications

1. Procédé de surveillance d'un élément de calcul dans un appareil de commande d'un véhicule à moteur, dans lequel l'élément de calcul comprend sensiblement trois modules de programme qui permettent d'agir sur la tenue de route du véhicule à moteur, dans lequel l'élément de calcul génère au moins une grandeur destinée à commander au moins une fonction du véhicule à moteur en fonction d'au moins une grandeur d'entrée, dans lequel :
- le premier module de programme est un module de fonction (E1) destiné à commander une fonction du véhicule à moteur,
- le deuxième module de programme est un module de sécurité (E2) destiné à surveiller le module de fonction (E1),
- le troisième module de programme est un module de surveillance (E3) au moins destiné à surveiller le module de sécurité (E2),
**caractérisé en ce que** le module de surveillance (E3) comprend deux éléments de surveillance (ME1, ME2) indépendants l'un de l'autre et **en ce qu'**un automate fini (SM1, SM2) respectif destiné à configurer une unité de surveillance (MU1, ME2) associée est respectivement parcouru par activation de l'appareil de commande dans l'élément de calcul, et si les deux automates finis (SM1, SM2) ont été correctement parcourus, les unités de surveillance (MU1, MU2) reprennent leur fonction de surveillance au moyen de l'élément de surveillance respectif (ME1, ME2).

2. Procédé selon la revendication 1, **caractérisé en ce que** la première unité de surveillance (MU1) effectue un premier contrôle (K1) dans le module de sécurité (E2) au moyen du premier élément de surveillance (ME1) et **en ce que** la deuxième unité de surveillance (MU2) effectue un deuxième contrôle (K2) dans le module de sécurité (E3) au moyen du deuxième élément de surveillance (ME2) sur des trajets de test (TP1, TP2).

3. Procédé selon la revendication 1 ou 2, **caractérisé en ce que** la première unité de surveillance (MU1) effectue un test de mémoire et un contrôle du déroulement du programme en tant que premier contrôle (K1) dans le module de sécurité (E2).

4. Procédé selon la revendication 1 ou 2, **caractérisé en ce que** la deuxième unité de surveillance (MU2) effectue un test de jeu d'instructions et un test de convertisseur analogique-numérique en tant que deuxième contrôle (K2) dans le module de surveillance (E3).

5. Procédé selon l'une quelconque des revendications précédentes, **caractérisé en ce que** lorsqu'il se produit un défaut lors des contrôles (K1, K2), un compteur de défauts est utilisé et lorsque des seuils programmables de réaction aux défauts (thresh, reset thresh) sont dépassés, une réaction du système est déclenchée par le module de surveillance (E3) indépendamment du module de fonction (E1).

6. Procédé selon l'une quelconque des revendications précédentes, **caractérisé en ce que**, lors de l'initialisation de l'appareil de commande dans l'élément de calcul, lors de la configuration de l'unité de surveillance (MU1, MU2) correspondante, en plus d'autres paramètres, un mot de réponse, une fenêtre de réponse, un seuil de désactivation (thresh) et un seuil de réinitialisation (reset thresh) sont définis, dans lequel les paramètres peuvent s'écarter les uns des autres pour chaque unité de surveillance (MU1, MU2).

7. Procédé selon l'une quelconque des revendications précédentes, **caractérisé en ce que** les deux unités de surveillance (MU1, MU2) sont configurées de manière identique.

8. Procédé selon l'une quelconque des revendications précédentes, **caractérisé en ce que** la configuration de l'unité de surveillance (MU1, MU2) correspondante n'est possible dans l'automate fini (SM1, SM2) associé que dans un état correspondant (INIT).

9. Procédé selon l'une quelconque des revendications précédentes, **caractérisé en ce que** seuls certaines transitions d'état définies sont autorisées dans l'automate fini (SM1, SM2) et **en ce qu'**un retour à l'état (INIT) n'est effectué que par une réinitialisation.

10. Procédé selon l'une quelconque des revendications précédentes, **caractérisé en ce qu'**un comptage de défauts est effectué de manière asymétrique.

11. Elément de calcul configuré par mise en oeuvre d'un procédé selon la revendication 1, dans lequel l'élément de calcul comprend sensiblement trois modules de programme qui permettent d'agir sur la tenue de route du véhicule à moteur, et dans lequel l'élément de calcul génère au moins une grandeur destinée à commander au moins une fonction du véhicule à moteur à l'aide du module de programme en fonction d'au moins une grandeur d'entrée, dans lequel :
- le premier module de programme est un module de fonction (E1) destiné à commander une fonction du véhicule à moteur,
- le deuxième module de programme est un module de sécurité (E2) destiné à surveiller le module de fonction (E1),
- le troisième module de programme est un module de surveillance (E3) au moins destiné à surveiller le module de sécurité (E2),
**caractérisé en ce que** le module de surveillance (E3) comprend deux éléments de surveillance (ME1, ME2) indépendants qui configurent les unités de surveillance (MU1, MU2) associées.

12. Processeur comportant un élément de calcul selon la revendication 11, dans lequel le processeur comprend sensiblement un calculateur de fonction (FR) et un calculateur de surveillance (UR), et dans lequel le module de fonction (E1), le module de sécurité (E2) et le module de surveillance (E3) sont mis en oeuvre sur le calculateur de fonction (FR), et le calculateur de surveillance (UR) communique avec le calculateur de fonction (FR) au moyen d'un procédé d'interrogation-réponse par l'intermédiaire d'une interface, **caractérisé en ce que**
le calculateur de fonction (FR) et le calculateur de surveillance (UR) sont physiquement indépendants l'un de l'autre, et le calculateur de surveillance (UR) comprend deux modules de surveillance (MU1, MU2) indépendants l'un de l'autre, dans lequel un contrôle respectif (K1, K2) destiné à surveiller la bonne exécution des instructions de programme du calculateur de fonction (FR) peut être effectué par chaque unité de surveillance (MU1, MU2) dans le calculateur de fonction (FR).

13. Calculateur de surveillance (UR) selon la revendication 12, **caractérisé en ce que** le calculateur de surveillance (UR) comprend deux unités de surveillance (MU1, MU2) indépendantes l'une de l'autre, dans lequel un contrôle respectif (K1, K2) destiné à surveiller la bonne exécution des instructions de programme du calculateur de fonction (FR) est effectué par chaque unité de surveillance (MU1, MU2) dans un calculateur de fonction (FR) à l'extérieur du calculateur de surveillance (UR).
